(19) Europäisches Patentamt
European Patent Office
Office européen des brevets

(11) EP 0 892 012 B2

(12) **NEUE EUROPÄISCHE PATENTSCHRIFT**

(45) Veröffentlichungstag und Bekanntmachung des Hinweises auf die Entscheidung über den Einspruch:
**30.06.2004 Patentblatt 2004/27**

(45) Hinweis auf die Patenterteilung:
**17.10.2001 Patentblatt 2001/42**

(21) Anmeldenummer: **98111800.3**

(22) Anmeldetag: **26.06.1998**

(51) Int Cl.[7]: **C08L 23/08**, C10M 145/08

# (54) Fliessverbesserer für Mineralöle

Flow improvers for mineral oils

Agent améliorant l'ecoulement d'huiles minerales

(84) Benannte Vertragsstaaten:
**AT BE DE FR GB NL**

(30) Priorität: **08.07.1997 DE 19729056**

(43) Veröffentlichungstag der Anmeldung:
**20.01.1999 Patentblatt 1999/03**

(73) Patentinhaber: **Clariant GmbH**
**65929 Frankfurt am Main (DE)**

(72) Erfinder:
- **Krull, Matthias, Dr.**
  **46147 Oberhausen (DE)**
- **Reimann, Werner, Dr.**
  **65929 Frankfurt (DE)**
- **Tepper, Ulrike**
  **46147 Oberhausen (DE)**

(56) Entgegenhaltungen:
**EP-A- 0 254 284**
**EP-A- 0 479 470**
**EP-A- 0 493 769**
**WO-A-94/00516**
**DE-A- 2 037 673**
**DE-A- 4 042 206**
**US-A- 5 439 981**

- **Kirk-Othmer, Encyclopedia of Chemical Technology, 3. Ed., Vol. 4, Seiten 861-863**

Bemerkungen:
Die Akte enthält technische Angaben, die nach dem Eingang der Anmeldung eingereicht wurden und die nicht in dieser Patentschrift enthalten sind.

EP 0 892 012 B2

## Beschreibung

Die vorliegende Erfindung betrifft Mischungen von Copolymerisaten aus Ethylen und Vinylestern tertiärer Carbonsäuren sowie deren Verwendung als Fließverbesserer für Mineralöle.

Rohöle und durch Destillation von Rohölen gewonnene Mitteldestillate wie Gasöl, Dieselöl oder Heizöl, enthalten je nach Herkunft der Rohöle unterschiedliche Mengen an n-Paraffinen, die bei Erniedrigung der Temperatur als plättchenförmige Kristalle auskristallisieren und teilweise unter Einschluß von Öl agglomerieren. Dadurch kommt es zu einer Verschlechterung der Fließeigenschaften dieser Öle bzw. Destillate, wodurch beispielsweise bei Gewinnung, Transport, Lagerung und/oder Einsatz der Mineralöle und Mineralöldestillate Störungen auftreten können. Bei Mineralölen kann dieses Kristallisationsphänomen beim Transport durch Rohrleitungen vor allem im Winter zu Ablagerungen an den Rohrwänden, in Einzelfällen, z.B. bei Stillstand einer Pipeline, sogar zu deren völliger Verstopfung führen. Auch bei der Lagerung und Weiterverarbeitung der Mineralöle kann die Ausfällung von Paraffinen Schwierigkeiten verursachen. So kann es im Winter unter Umständen erforderlich sein, die Mineralöle in beheizten Tanks zu lagern. Bei Mineralöldestillaten können als Folge der Kristallisation Verstopfung der Filter in Dieselmotoren und Feuerungsanlagen auftreten, wodurch eine sichere Dosierung der Brennstoffe verhindert wird und gegebenenfalls eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (sogenannten Fließverbesserer oder Paraffin-Inhibitoren) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl von kleineren Paraffin kristallen mit veränderter Kristallform resultiert. Ein Teil der Wirkung der Additive wird auch durch eine Dispergierung der Paraffinkristalle erklärt. Die modifizierten Paraffinkristalle neigen weniger zur Agglomeration, so daß sich die mit diesen Additiven versetzten Öle noch bei Temperaturen pumpen bzw. verarbeiten lassen, die oft mehr als 20° tiefer liegen als bei nichtadditivierten Ölen.

Das Fließ- und Kälteverhalten von Mineralölen und Mineralöldestillaten wird durch Angabe des Pour-Points (bestimmt nach ISO 3016) und des Cold-Filter-Plugging-Points (CFPP; bestimmt nach EN 116) beschrieben. Beide Kenngrößen werden in °C gemessen.

Typische Fließverbesserer für Rohöle und Mitteldestillate sind Copolymerisate des Ethylens mit Carbonsäureestem des Vinylalkohols. So setzt man nach der DE-A-11 47 799 Erdöldestillat-Treib- bzw. -Brennstoffen mit einem Siedepunkt zwischen etwa 120 und 400°C öllösliche Mischpolymerisate aus Ethylen und Vinylacetat mit einem Molekulargewicht zwischen etwa 1.000 und 3.000 zu. Bevorzugt werden Mischpolymerisate, die etwa 60 bis 99 Gew.-% Ethylen und etwa 1 bis 40 Gew.-% Vinylacetat enthalten. Sie sind besonders wirksam, wenn sie durch radikalische Polymerisation in einem inerten Lösungsmittel bei Temperaturen von etwa 70 bis 130°C und Drücken von 35 bis 2.100 atü hergestellt wurden (DE-A-19 14 756).

Im Stand der Technik sind auch Mischungen von Copolymeren als Fließverbesserer beschrieben.

DE-A-22 06 719 offenbart Mischungen von Ethylen/Vinylacetat-Copolymeren mit unterschiedlichen Comonomergehalten zur Verbesserung des Kaltfließverhaltens von Mitteldestillaten.

DE-A-20 37 673 offenbart synergistische Mischungen von Ethylen-Vinylester-Copolymeren verschiedener Molekulargewichte als Fließverbesserer.

EP-A-0 254 284 offenbart Mischungen aus Ethylen/Vinylacetat-Copolymeren mit Ethylen/Ninylacetat/Diisobutylen-Terpolymeren als Fließverbesserer für Mineralöle und Mineralöldestillate.

EP-A-0 648 247 offenbart Mischungen von mindestens 2 verschiedenen EthylenNinylacetat-Copolymeren und deren Verwendung als Fließverbesserer für Mineralöle, wobei die Copolymeren zunächst verseift und dann wieder verestert werden.

EP-A-0 648 257 offenbart Mischungen aus mindestens 2 Ethylen/Vinylester-Copolymeren, wobei die Vinylester sich von Carbonsäuren mit 2 bis 7 Kohlenstoffatomen ableiten.

EP-B-0 648 258 offenbart temäre Mischungen aus Ethylen/Vinylester-Copolymeren, wobei eine der Mischungskomponenten zwischen 7,5 und 35 und -% des Vinylester-Comonomeren und eine weitere der Mischungskomponenten unter 10 mol -% der Vinylester-Comonomeren enthält.

EP-A-0113581 offenbart Mischungen aus zwei EthylenNinylester-Copolymeren, in denen der Vinylester aus Carbonsäuren von 1 bis 4 Kohlenstoffatomen abgeleitet ist. Eines der Copolymere ist ein Paraffinkristallkeimbildner, während das andere Copolymer ein Wachstumshemmer ist.

EP-A-0 741 181 offenbart Mischungen aus zwei Copolymeren, von denen mindestens eines Vinylester mit Alkyl- oder Alkenylresten mit mehr als 4 Kohlenstoffatomen als Comonomere enthält.

Die Wirksamkeit der bekannten Zusatzstoffe zur Verbesserung der Eigenschaften von Mineralölfraktionen ist u.a. abhängig von der Herkunft des Mineralöls, aus dem sie gewonnen wurden und damit insbesondere von dessen

Zusammensetzung Additive, die zur Einstellung bestimmter Eigenschaftswerte von Fraktionen eines Rohöls hervorragend geeignet sind, können daher bei Destillaten von Rohölen anderen Ursprungs zu völlig unbefriedigenden Ergebnissen führen.

Inzwischen stehen Additive zur Verfügung, die einen breiten Anwendungsbereich haben, d.h. die Fließeigenschaften von Mineralölen und Mineralölfraktionen unterschiedlicher Herkunft bei tiefen Temperaturen deutlich verbessern. Dennoch gibt es Fälle, in denen sie sich als wenig oder gar nicht brauchbar erweisen, beispielsweise weil sie nur wenig zur Erhöhung der Fließfähigkeit in der Kälte beitragen. Die Ursachen hierfür sind vielfältig; die Erschließung bisher nicht genutzter Rohstoffe, die geänderte Verarbeitung der Primärprodukte und neue Anforderungen des Marktes seien als Beispiele genannt. Nachteilig bei vielen Additiven ist weiterhin, daß. sie die Filtrierbarkeit von Mineralöldestillaten oberhalb des Cloud Points beeinträchtigen.

Zur Verhinderung der Filtrationsprobleme müssen daher spezielle Mischbedingungen wie hohe Temperatur von Mineralöl und/oder Additiv eingehalten werden, was insbesondere für die Ethylen/Vinylacetat-Copolymeren gilt. Terpolymere aus Ethylen, Vinylacetat und Vinylestem von Neocarbonsäuren (Versaticsäuren) zeichnen sich dagegen durch eine sehr gute Löslichkeit aus, aber erniedrigen den CFPP insbesondere bei höheren Comonomergehalten nicht in ausreichendem Maß. Ein weiteres Problem stellt die Lagerung der Additivkonzentrate dar. Aufgrund der begrenzten Löslichkeit in organischen Lösungsmitteln und der vergleichsweise hohen Dichte der Copolymeren kommt es vor allem bei niedrigen Lagertemperaturen zur Sedimentation im Lagerbehälter.

Es bestand daher die Aufgabe, Additive für Mineralöle und Mineralöldestillate zu finden, die sowohl zu einer sehr quten CFPP-Erniedrigung führen. als auch in der Kälte hinreichend löslich sind, um die bei den Fließverbesserern des Standes der Technik auftretenden Filtrationsprobleme zu vermeiden. Außerdem soll eine verbesserte Sedimentationsstabilität der Konzentrate (Suspensionen) auch bei niedrigen Temperaturen erreicht werden.

Überraschenderweise wurde gefunden, daß Mischungen, die ein Terpolymer aus Ethylen, Vinylacetat und einem Neocarbonsäurevinylester und ein Copolymer aus Ethylen und Vinylacetat enthalten, eine Lösung dieser Aufgabe darstellen. Eine weitere Lösung der Aufgabe bilden Mischungen aus zwei der genannten Terpolymere mit unterschiedlichen Comonomergehalten und/oder Molekulargewichten, sowie aus einem der genannten Terpolymere und aus Ethylen/Vinylacetat/Olefin-Terpolymeren.

Gegenstand der Erfindung sind Mischungen, enthaltend

A) ein Copolymer aus niederen Olefinen und Vinylestem, enthaltend

a) 65 bis 94 mol-% bivalente Struktureinheiten der Formel 1

$$-CH_2-CR^1R^2- \qquad (1)$$

worin $R^1$ und $R^2$ unabhängig voneinander Wasserstoff oder Methyl bedeuten,

b) 1 bis 25 mol-% bivalente Struktureinheiten der Formel 2

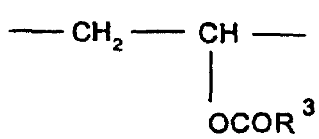

2

worin $R^3$ gesättigtes, verzweigtes $C_6$-$C_{16}$-Alkyl bedeutet, das ein tertiäres Kohlenstoffatom aufweist, und

c) 5 bis 35 mol -% bivalente Struktureinheiten der Formel 3

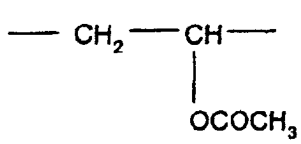

3

wobei die Summe der molaren Anteile an Comonomeren der Formeln 2 und 3 zwischen 6 und 35 mol-% liegt,

und

B) ein weiteres Copolymer wie unter A) beschrieben, wobei das Mischungsverhältnis A:B zwischen 10:1 und 1: 10 nach Gewicht liegt,

dadurch gekennzeichnet, daß $R^3$ mit seinem tertiären Kohlenstoffatom an die Carboxylfunktion gebunden ist.

$R^1$ und $R^2$ bedeuten vorzugsweise Wasserstoff. $R^3$ bedeutet vorzugsweise einen Neoalkylrest mit 7 bis 11 Kohlenstoffatomen, insbesondere einen Neoalkylrest mit 8, 9 oder 10 Kohlenstoffatomen. Die Neoalkylsäuren, von denen sich die oben genannten Neoalkylreste ableiten lassen, werden durch die Formel 3 beschrieben:

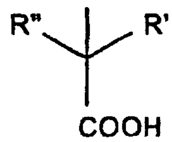

3

R' und R" sind lineare Alkylreste mit zusammen vorzugsweise 5 bis 9, insbesondere 6 bis 8 und speziell 7 oder 8 Kohlenstoffatomen. Der zur Copolymerisation verwendete Vinylester hat demzufolge die Formel 4:

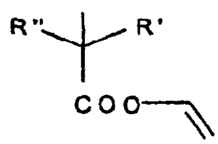

4

Vorzugsweise handelt es sich um die Vinylester der Neononan-, Neodecan- und Neoundecansäure. Copolymer A) enthält vorzugsweise 1 bis 15 mol-% der Struktureinheiten der Formel 2.
Die Summe der molaren Anteile an Comonomeren der Formeln 2 und 3 liegt vorzugsweise zwischen 6 und 20 mol-%.

Die für die erfindungsgemäßen Mischungen verwendeten Copolymere sind durch die üblichen Copolymerisationsverfahren wie beispielsweise Suspensionspolymerisation, Lösungsmittelpolymerisation, Gasphasenpolymerisation oder Hochdruckmassepolymerisation herstellbar. Bevorzugt ist dabei die Hochdruckmassepolymerisation bei Drucken von vorzugsweise 50 bis 400, insbesondere 100 bis 300 MPa und Temperaturen von vorzugsweise 50 bis 300, insbesondere 100 bis 250°C. Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxidcarbonat, t-Butylperpivalat, t-Butylpermaleinat, t-Butylperbenzoat, Dicumylperoxid, t-Butylcumylperoxid, Di-(t-butyl) peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,001 bis 20 Gew.-%, vorzugsweise 0,01 bis 10 Gew.-%, bezogen auf das Monomerengemisch, eingesetzt.

Vorzugsweise haben die erfindungsgemäßen Mischungen Schmelzviskositäten bei 140°C von 20 bis 10.000 mPas, insbesondere von 30 bis 5000 mPas, speziell von 50 bis 2000 mPas. Die gewünschte Schmelzviskosität der Mischungen wird durch Variation des Mischungsverhältnisses der Copolymeren eingestellt.

Die unter A) und B) genannten Copolymere können bis zu 5 mol-%, bevorzugt bis zu 2 mol-%, weiterer Comonomere enthalten. Solche Comonomere können beispielsweise Vinylester, Vinylether, Acrylsäurealkylester, Methacrylsäurealkylester mit $C_1$- bis $C_{20}$-Alkylresten, Isobutylen oder höhere Olefine mit mindestens 5 Kohlenstoffatomen sein. Bevorzugt als höhere Olefine sind Hexen, 4-Methylpenten, Octen oder Diisobutylen.

Die Hochdruckmassepolymerisation wird in bekannten Hochdruckreaktoren, z.B. Autoklaven oder Rohrreaktoren, diskontinuierlich oder kontinuierlich durchgeführt, besonders bewährt haben sich Rohrreaktoren. Lösungsmittel wie aliphatische und/oder aromatische Kohlenwasserstoffe oder Kohlenwasserstoffgemische, Benzol oderToluol, können im Reaktionsgemisch enthalten sein. Bevorzugt ist die lösungsmittelfreie Arbeitsweise. In einer bevorzugten Ausführungsform der Polymerisation wird das Gemisch aus den Monomeren, dem Initiator und, sofern eingesetzt, dem Moderator, einem Rohrreaktor über den Reaktoreingang sowie über einen oder mehrere Seitenäste zugeführt. Hierbei können die Monomerenströme unterschiedlich zusammengesetzt sein (EP-A-0 271 738).

Die erfindungsgemäßen Mischungen werden Mineralölen oder Mineralöldestillaten in Form von Lösungen

oder Dispersionen zugesetzt. Diese Lösungen oder Dispersionen enthalten vorzugsweise 1 bis 90, insbesondere 5 bis 80 Gew.-% der erfindungsgemäßen Mischungen. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ® Shellsoll AB, ® Solvesso 150, ® Solvesso 200, ® Exxsol, ® ISOPAR- und ® Shellsol D-Typen. Die angegebenen Lösemittelgemische enthalten unterschiedliche Mengen an aliphatischen und/oder aromatischen Kohlenwasserstoffen. Die Aliphaten können geradkettig (n-Paraffine) oder verzweigt sein (iso-Paraffine). Aromatische Kohlenwasserstoffe können mono-, di- oder polyzyklisch sein und gegebenfalls einen oder mehrere Substituenten tragen. Durch die erfindungsgemäßen Mischungen in ihren rheologischen Eigenschaften verbesserte Mineralöle oder Mineralöldestillate enthalten 0,001 bis 2, vorzugsweise 0,005 bis 0,5 Gew.-% der Mischungen, bezogen auf das Destillat.

Mit dem gleichen Ergebnis, die Wirksamkeit als Fließverbesserer für bestimmte Substrate zu optimieren, können die erfindungsgemäßen Mischungen auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind polare Verbindungen, die ein Paraffindispergierung bewirken (Paraffindispergatoren), sowie Kammpolymere.

Paraffindispergatoren reduzieren die Größe der Paraffinkristalle und bewirken, daß die Paraffinpartikel sich nicht absetzen, sondern kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (US-4 211 534). Andere Paraffindispergatoren sind Copolymere des Maleinsäureanhydrids und α,β-ungesättigter Verbindungen, die gegebenenfalls mit primären Monoalkylaminen und/oder aliphatischen Alkoholen umgesetzt werden können (EP-A-0 154 177), die Umsetzungsprodukte von Alkenylspirobislactonen mit Aminen (EP-A-0 413 279) und nach EP-A-0 606 055 Umsetzungsprodukte von Terpolymerisaten auf Basis α,β-ungesättigter Dicarbonsäureanhydride, α,β-ungesättigter Verbindungen und Polyoxyalkenylether niederer ungesättigter Alkohole. Auch Alkylphenol-Formaldehydharze sind als Paraffindispergatoren geeignet.

Unter Kammpolymeren versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymeren, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers - Structure and Properties; N.A. Platé and V.P. Shibaev, J. Polym. Sci.

Macromolecular Revs. 1974, 8,117ff). Beispiele für geeignete Kammpolymere sind z.B. Fumarat/Vinylacetat-Copolymere (vgl. EP-A- 0 153 176), Copolymere aus einem $C_6$-$C_{24}$-α-Olefin und einem N-$C_6$- bis $C_{22}$-Alkylmaleinsäureimid (vgl.
EP-A-0 320 766), ferner veresterte Olefin/Maleinsäureanhydrid-Copolymere, Polymere und Copolymere von α-Olefinen und veresterte Copolymere von Styrol und Maleinsäureanhydrid.

Das Mischungsverhältnis (in Gewichtsteilen) der erfindungsgemäßen Mischungen mit Paraffindispergatoren bzw. Kammpolymeren beträgt jeweils 1:10 bis 20:1, vorzugsweise 1:1 bis 10:1.

Die erfindungsgemäßen Mischungen sind geeignet, die Kaltfließeigenschaften von tierischen, pflanzlichen oder mineralischen Ölen zu verbessern. Sie sind für die Verwendung mit Mitteldestillaten besonders gut geeignet. Als Mitteldestillate bezeichnet man insbesondere solche Mineralöle, die durch Destillation von Rohöl gewonnen werden und im Bereich von 120 bis 400°C sieden, beispielsweise Kerosin, Jet-Fuel, Diesel und Heizöl. Vorteile der erfindungsgemäßen Mischungen sind ihr CFPP-Synergismus gegenüber den Einzelkomponenten und eine gute Filtrierbarkeit der additivierten Öle oberhalb des Cloud Point, obwohl einzelne Komponenten nicht filtrierbar sind. Die Konzentrate zeigen eine deutlich verbesserte Lagerstabilität bei niedrigen Temperaturen.

Die neuen Mischungen können allein oder auch zusammen mit anderen Zusatzstoffen verwendet werden, beispielsweise mit Entwachsungshilfsmitteln, Korrosionsinhibitoren, Antioxidantien, Lubricity-Additiven oder Schlamminhibitoren.

Beispiele

Es wurden die folgenden Polymere, jeweils 50 %ig in Kerosin suspendiert, eingesetzt (die Abkürzungen bedeuten

E = Ethylen, VA = Vinylacetat, VeoVa = Neodecansäurevinylester,
$V_{140}$ = Schmelzviskosität bei 140°C gemessen nach ISO 3219):

D) E/VA/VeoVa-Terpolymer mit 25 Gew.-% VA, 9,5 Gew.-% VeoVa, $V_{140}$ = 850 mPas gemäß EP 493769

E) E/VA/VeoVa-Terpolymer mit 31 Gew.-% VA, 8 Gew.-% Neodecansäurevinylester, $V_{140}$ = 110 mPas gemäß EP 493769

F) E/VA/VeoVa-Terpolymer mit 32 Gew.-% VA, 11 Gew.-% Neodecansäurevinylester, $V_{140}$ = 260 mPas gemäß EP 493769

G) E/VA/VeoVa-Terpolymer mit 31 Gew.-% VA, 9 Gew.-% Neodecansäurevinylester und $V_{140}$ = 230 mPas

Tabelle 1

| Charakterisierung der Testöle (Angaben in °C) | | | | | |
|---|---|---|---|---|---|
| | Testöl 1 | Testöl 2 | Testöl 3 | Testöl 4 | Testöl 5 |
| Siedebeginn | 174 | 166 | 180 | 166 | 165 |
| 20 % Siedepunkt | 204 | 209 | 268 | 214 | 109 |
| 50 % Siedepunkt | 239 | 252 | 307 | 282 | 243 |
| 90 % Siedepunkt | 328 | 315 | 350 | 356 | 327 |
| Siedeende | 367 | 337 | 336 | 376 | 357 |
| Cloud Point | -8 | -12 | 0 | +4,2 | -7,2 |
| CFPP | -10 | -16 | -3 | +3 | -9 |

Löslichkeit der Polymermischungen

Die Löslichkeit der Polymere und deren Mischungen wurde in einem Filtrationstest wie folgt bestimmt: 130 ml Testöl 1 von Raumtemperatur wurden, sofern nicht anders angegeben, mit 500 ppm des auf 40°C temperierten Additivs versetzt. Nach 20-maligen Umschwenken des Gefäßes wurde visuell kontrolliert, ob Additivreste sichtbar sind und anschließend mit einem Vakuum von 200 mbar über einen 0,8 µm Cellulosenitratfilter (25 mm ø) filtriert. Dabei zeigt eine Saugzeit von weniger als fünf Minuten für das gesamte Ölvolumen eine gute Löslichkeit des Additivs. Bei einer Saugzeit von mehr als fünf Minuten wurde das in dieser Zeit filtrierte Volumen notiert. Die angegebenen Additiv wurden als 50 %ige Dispersionen in Kerosin eingesetzt.

Tabelle 2 :

| Löslichkeit der Polymermischungen (Testöl 1) | | |
|---|---|---|
| reine Copolymere | Filtrationszeit | Volumen |
| Blindwert (= kein Additiv) | 36 sec. | - |
| D) | Additiv nicht löslich | |
| E) | 65 sec | - |
| F) | 43 sec | - |
| Mischungen | | |
| D+F(8:1) | 55 sec | - |
| Löslichkeit der Polymere (Testöl 5): | | |
| Copolymere | Filtrationszeit | Volumen |
| E) | 32 sec. | - |
| G) | 33 sec. | - |
| Blindwert | 31 sec. | - |

Sedimentationsstabilität

Zur Beurteilung des Sedimentationsverhaltens verdünnter Suspensionen von Fließverbesserern wurden bei 80 bis 100°C hergestellte 50 %ige Lösungen der Copolymerwachse in Kerosin mit weiteren 9 Teilen Kerosin (Raumtemperatur) verdünnt. Es entstanden bei Raumtemperatur trübe Suspensionen, deren Sedimentationsverhalten über einen Zeitraum von zwei Wochen an Hand der Sedimentmenge beurteilt wurden. Zur Quantifizierung des Sedimentationsverhaltens wurde der WDI (Wax Dispersion Index) bestimmt.

$$\text{WDI}=\frac{\text{Volumen Sediment}}{\text{Gesamtvolumen}}\cdot 100\%$$

Ein hoher WDI zeigt eine geringe Sedimentation und somit eine gute Stabilität der Suspension.

Tabelle 3

| | | Wax Dispersion Index (WDI, %) | | | |
|---|---|---|---|---|---|
| Produkt | Aussehen RT | 3 Tage | 6 Tage | 10 Tage | 14 Tage |
| A | dtl. trübe | 92 | 92 | 2 | 3 |
| D | dtl. trübe | 95 | 20 | 2 | 1 |
| E | klar | 100 | 100 | 100 | 100 |
| D + F | dtl. trübe | 97 | 97 | 91 | 1 |
| E + D + F | leicht trübe | 100 | 100 | 100 | 100 |
| A + F | leicht trübe | 100 | 100 | 100 | 100 |
| A + E | leicht trübe | 100 | 100 | 100 | 100 |

CFPP-Synergismus

In den Tabellen 4 bis 6 wird die gegenüber den Einzelkomponenten überlegene Wirksamkeit der erfindungsgemäßen Polymermischungen als Additive für Mineralöle und Mineralöldestillate an Hand des CFPP-Tests (Cold Filter Plugging Test nach EN 116) beschrieben. Die Additive werden als 50 %ige Suspensionen in Kerosin eingesetzt. Angaben in °C.

Tabelle 4:

| CFPP-Synergismus in Testöl 3 | | | |
|---|---|---|---|
| | 600 ppm | 800 ppm | 1000 ppm |
| E | -6 | -10 | -14 |
| F | -5 | -8 | -9 |
| E+F | -6 | -13 | -17 |

Liste der verwendeten Handelsbezeichnungen

| Solvent Naphtha | |
|---|---|
| ®Shellsol AB<br>®Solvesso 150<br>®Solvesso<br>®Exxsol<br><br>®ISOPAR (Exxon) | <br>aromatische Lösemittelgemische mit Siedebereich 180 bis 210°C<br>200 aromatisches Lösemittelgemisch mit Siedebereich 230 bis 287°C<br>Dearomatisierte Lösemittel in verschiedenen Siedebereichen, beispielsweise ®Exxsol D60: 187 bis 215°C<br>isoparaffinische Lösemittelgemische in verschiedenen Siedebereichen, beispielsweise ®ISOPARL: 190 bis 210°C |

(fortgesetzt)

| Solvent Naphtha | |
|---|---|
| ®Shellsol D | hauptsächlich aliphatische Lösemittelgemische in verschiedenen Siedebereichen |

**Patentansprüche**

**1.** Mischungen, enthaltend

A) ein Copolymer aus niederen Olefinen und Vinylestern, enthaltend

a) 65 bis 94 mol-% bivalente Struktureinheiten der Formel 1

$$-CH_2-CR^1R^2- \quad 1$$

worin $R^1$ und $R^2$ unabhängig voneinander Wasserstoff oder Methyl bedeuten,
b) 1 bis 25 mol-% bivalente Struktureinheiten der Formel 2

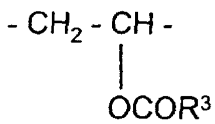 2

worin $R^3$ gesättigtes, verzweigtes $C_6$-$C_{16}$-Alkyl bedeutet, das ein tertiäres Kohlenstoffatom aufweist, und
c) 5 bis 35 mol-% bivalente Struktureinheiten der Formel 3

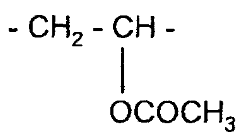 3

wobei die Summe der molaren Anteile an Comonomeren der Formeln 2 und 3 zwischen 6 und 35 mol-% liegt,

und
B) ein weiteres Copolymer wie unter A) beschrieben, wobei das Mischungsverhältnis A:B zwischen 10:1 und 1:10 nach Gewicht liegt,

**dadurch gekennzeichnet, dass** $R^3$ mit seinem tertiären Kohlenstoffatom an die Carboxylfunktion gebunden ist.

**2.** Mischungen nach Anspruch 1, **dadurch gekennzeichnet, dass** $R^1$ und $R^2$ Wasserstoff bedeuten.

**3.** Mischungen nach Anspruch 1 und/oder 2, **dadurch gekennzeichnet, dass** $R^3$ einen Neoalkylrest mit 7 bis 11 Kohlenstoffatomen, insbesondere einen Neoalkylrest mit 8, 9 oder 10 Kohlenstoffatomen bedeutet.

**4.** Mischungen nach einem oder mehreren der Ansprüche 1 bis 3, **dadurch gekennzeichnet, dass** Copolymer A) 1 bis 15 mol-% an Struktureinheiten der Formel 2 enthält.

**5.** Mischungen nach einem oder mehreren der Ansprüche 1 bis 4, **dadurch gekennzeichnet, dass** sie Schmelzviskositäten bei 140°C von 20 bis 10.000 mPa·s, insbesondere von 30 bis 5000 mPa·s, speziell von 50 bis 2000 mPa s aufweisen.

**6.** Mischungen nach einem oder mehreren der Ansprüche 1 bis 5, **dadurch gekennzeichnet, dass** die unter A) oder B) genannten Copolymere bis zu 5 mol-% weiterer Comonomere enthalten.

**7.** Mischungen nach Anspruch 6, **dadurch gekennzeichnet, dass** sie als weitere Comonomere Vinylester, Vinylether, Acrylsäurealkylester, Methacrylsäurealkylester, Isobutylen oder höhere Olefine mit mindestens 5 Kohlenstoffatomen, bevorzugt Hexen, 4-Methylpenten, Octen oder Diisobutylen, enthalten.

**8.** Mischungen nach einem oder mehreren der Ansprüche 1 bis 7, **dadurch gekennzeichnet, dass** sie Paraffindispergatoren und/oder Kammpolymere enthalten.

**9.** Verwendung von Mischungen nach einem oder mehreren der Ansprüche 1 bis 8 als Additiv zur Verbesserung der Kaltfließeigenschaften von Mineralölen.

**10.** Öle, enthaltend Mischungen nach einem oder mehreren der Ansprüche 1 bis 8.

## Claims

**1.** A mixture comprising

A) a copolymer of lower olefins and vinyl esters, comprising

a) from 65 to 94 mol% of divalent structural units of the formula 1

$$-CH_2-CR^1R_2-$$

in which $R^1$ and $R^2$, independently of one another, are hydrogen or methyl,
b) from 1 to 25 mol% of divalent structural units of the formula 2

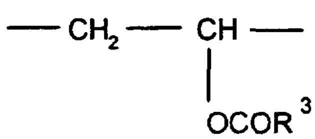

2

in which $R^3$ is saturated, branched $C_6$-$C_{16}$-alkyl which contains a tertiary carbon atom, and
c) from 5 to 35 mol% of divalent structural units of the formula 3

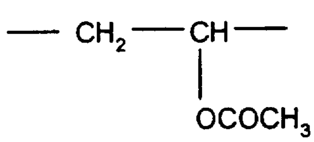

3

where the sum of the molar proportions of comonomers of the formulae 2 and 3 is between 6 and 35 mol%,

and

B) a further copolymer as described under A), where the A:B mixing ratio is between 10:1 and 1:10 by weight,

wherein $R^3$ is bonded to the carboxyl function via its tertiary carbon atom.

**2.** A mixture as claimed in claim 1, wherein $R^1$ and $R^2$ are hydrogen.

**3.** A mixture as claimed in claim 1 and/or 2, wherein $R^3$ is a neoalkyl radical having 7 to 11 carbon atoms, in particular

a neoalkyl radical having 8, 9 or 10 carbon atoms.

**4.** A mixture as claimed in one or more of claims 1 to 3, wherein copolymer A) contains from 1 to 15 mol% of structural units of the formula 2.

**5.** A mixture as claimed in one or more of claims 1 to 4, which has a melt viscosity at 140°C of from 20 to 10,000 mPas, in particular from 30 to 5000 mPas, especially from 50 to 2000 mPas.

**6.** A mixture as claimed in one or more of claims 1 to 5, wherein the copolymers mentioned under A) or B) contain up to 5 mol% of further comonomers.

**7.** A mixture as claimed in claim 6, which contains, as further comonomers, vinyl esters, vinyl ethers, alkyl acrylates, alkyl methacrylates, isobutylene or higher olefins having at least 5 carbon atoms, preferably hexene, 4-methylpentene, octene or diisobutylene.

**8.** A mixture as claimed in one or more of claims 1 to 7, which contains paraffin dispersants and/or comb polymers.

**9.** The use of a mixture as claimed in one or more of claims 1 to 9 as an additive for improving the low-temperature flow properties of mineral oils.

**10.** An oil containing a mixture as claimed in one or more of claims 1 to 8.

**Revendications**

**1.** Mélanges contenant

A) un copolymère d'oléfines inférieures et d'esters vinyliques contenant

a) de 65 à 94 % molaires d'unités de structure bivalentes de formule 1

$$- CH_2-CR^1R^2- \qquad 1$$

où $R^1$ et $R^2$ représentent, indépendamment l'un de l'autre, un atome d'hydrogène ou un groupe méthyle
b) de 1 à 25 % molaires d'unités de structure bivalentes de formule 2

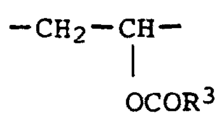

2

où $R^3$ représente un groupe alkyle en $C_6$-$C_{16}$ ramifié, saturé, qui présente un atome de carbone tertiaire, et
c) de 5 à 35 % molaires d'unités de structure bivalentes de formule 3

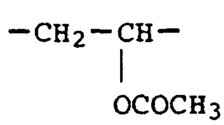

2

la somme des taux molaires de comonomères de formules 2 et 3 étant comprise entre 6 et 35 % molaires

et
B) un autre copolymère comme décrit au point A), le rapport en poids d'ingrédients A:B étant compris entre 10:1 et 1:10,

**caractérisé en ce que** $R^3$ est lié à la fonction carboxyle par l'intermédiaire de son atome de carbone tertiaire.

2. Mélanges selon la revendication 1, **caractérisés en ce que** $R^1$ et $R^2$ représentent un atomes d'hydrogène.

3. Mélanges selon la revendication 1 et/ou 2, **caractérisés en ce que** $R^3$ représente un reste néoalkyle présentant de 7 à 11 atomes de carbone, notamment un reste néoalkyle présentant 8, 9 ou 10 atomes de carbone.

4. Mélanges selon une ou plusieurs des revendications 1 à 3, **caractérisés en ce que** le copolymère A) contient de 1 à 15 % molaires d'unités de structure de formule 2.

5. Mélanges selon une ou plusieurs des revendications 1 à 4, **caractérisés en ce que** les viscosités à chaud à 140°C se situent de 20 à 10000 mPas, en particulier de 30 à 5000 mPas, spécialement de 50 à 2000 mPas.

6. Mélanges selon une ou plusieurs des revendications 1 à 5, **caractérisés en ce que** les copolymères cités aux points A) et B) contiennent jusqu'à 5 % molaires d'autres comonomères.

7. Mélanges selon la revendication 6, **caractérisés en ce qu'**ils contiennent, en tant que d'autres comonomères des esters vinyliques, des éthers vinyliques des esters alkyliques de l'acide acrylique, des esters alkyliques de l'acide méthacrylique, l'isobutylène ou des oléfines supérieures présentant au moins 5 atomes de carbone, de préférence l'hexène, le 4-méthylpentène, l'octène ou le diisobutylène.

8. Mélanges selon une ou plusieurs des revendications 1 à 7, **caractérisés en ce qu'**ils contiennent des dispersants de paraffines et/ou des polymères en forme de peigne.

9. Utilisation de mélanges selon une ou plusieurs des revendications 1 à 8 en tant qu'additif pour l'amélioration des propriétés d'écoulement à froid des huiles minérales.

10. Huiles contenant des mélanges selon une ou plusieurs des revendications 1 à 8.